# EUROPÄISCHE PATENTSCHRIFT

(11) **EP 3 419 880 B1**
(45) Veröffentlichungstag und Bekanntmachung des Hinweises auf die Patenterteilung: **15.07.2020**
(21) Anmeldenummer: 17707281.6
(22) Anmeldetag: 24.02.2017
(51) Int. Cl.: B62B 3/14, G06F 1/16, H04B 1/3877, H04M 1/02, H04M 1/04

(54) **VERFAHREN ZUR LÖSBAREN BEFESTIGUNG EINER SMARTPHONE-HALTERUNG AN EINEM EINKAUFSWAGEN**
METHOD FOR DETACHABLY FASTENING A SMARTPHONE HOLDER TO A SHOPPING CART
PROCÉDÉ DE FIXATION AMOVIBLE D'UN SUPPORT DE SMARTPHONE À UN CHARIOT DE SUPERMARCHÉ

(30) Priorität: 28.02.2016 DE 102016002278
(43) Veröffentlichungstag der Anmeldung: 02.01.2019
(73) Patentinhaber: Wieth, Franz, 82178 Puchheim (DE); Filosi, Andreas, 82178 Puchheim (DE)
(72) Erfinder: Wieth, Franz, 82178 Puchheim (DE); Filosi, Andreas, 82178 Puchheim (DE)
(74) Vertreter: Braun-Dullaeus Pannen Emmerling Patent- & Rechtsanwaltspartnerschaft mbB
(86) Internationale Anmeldenummer: PCT/EP2017/054311
(87) Internationale Veröffentlichungsnummer: WO 2017/144655

(56) Entgegenhaltungen:
- WO-A1-2013/153204
- WO-A1-2015/055851
- US-A1- 2012 119 874

## Beschreibung

Die Erfindung betrifft ein verbessertes Verfahren zur lösbaren Befestigung einer Smartphone - Halterung an einem Einkaufswagen, wobei in einem ersten Schritt ein Smartphone auf eine Aufnahme der Halterung aufgesetzt wird, und wobei in einem zweiten Schritt das Smartphone in der Aufnahme verriegelt wird.

Aus der WO2013/153204 A1 ist eine Halterung für ein mobiles Endgerät zur Nutzung als Self-Scanner bekannt, welche ein Befestigungsmittel zur Befestigung der Halterung an einem Einkaufswagen bekannt,

Diese Anmeldung macht sich den in der PCT/EP2014/072378 dargelegten Offenbarungsgehalt zu Eigen. Sie stellt sich die Aufgabe, zu den dort beschriebenen Halterungen, den Schnittstellen und Befestigungsmittel vorteilhafte Ergänzungen, Vereinfachungen und/oder Alternativen vorzuschlagen, mit denen die Halterung weiter verbessert werden kann.

Diese Aufgabe wird gelöst durch ein Verfahren zur lösbaren Befestigung einer Smartphone - Halterung an einem Einkaufswagen mit den Merkmalen des Anspruchs 1. Eine besonders vorteilhafte Ausführungsform wird im Unteranspruch 2 genannt.

Ein wesentlicher Aspekt der PCT/EP2014/072378 ist die an einem Einkaufswagen bzw. dessen Griff befestigbare und verriegelbare Halterung, mit der ein vom Kunden in ein Geschäft mitgebrachtes mobiles Telekommunikationsendgerät, ein so genanntes Smartphone, am Einkaufswagen befestigt werden kann. Das in die Halterung eingelegte Smartphone lässt sich dort ebenfalls verriegelt, so dass eine unberechtigte Entnahme des in der Halterung am Einkaufswagen eingesetzten Smartphones verhindert werden kann. Eine Verriegelung im Sinne dieser Anmeldung ist eine durch Formschluss hergestellte Blockade, die nicht durch eine Verformung des Riegels, sondern durch Entfernen des Riegels aus seiner Blockadestellung wieder gelöst wird.

Die für das Smartphone vorgesehene Halterung weist eine Aufnahme auf, in der das Smartphone verriegelt gehalten werden kann. Neben dem hierfür erforderlichen ersten Verriegelungssystem umfasst sie Elemente eines zweiten Verriegelungssystems, mit dem die Halterung sicher am Einkaufswagengriff befestigt werden kann. Um eine unberechtigte Entnahme des Smartphones aus der Halterung zu verhindern, wird vorgeschlagen, das Entriegeln des ersten Verriegelungsmechanismus nur nach einer Berechtigungsüberprüfung zu ermöglichen.

In einer der PCT/EP2014/072378 zu entnehmenden alternativen Ausführungsform der dort erläuterten Halterung erfolgt eine Berechtigungsprüfung und der den ersten Verriegelungsmechanismus lösende Auslöser ist an der Halterung frei zugänglich. Die erfindungsgemäße Berechtigungsprüfung erfolgt vorzugsweise mittels eines Tokens, der einer bestimmten Halterung zugeordnet ist. Der Token ist in die Halterung eingesteckt und wird zusammen mit ihr aus der Basis-Station entnommen. Ein solcher Token kann eine bestimmte Geometrie aufweisen, die von der Halterung geprüft wird. Bevorzugt weist er wie die zuvor beschriebene Kundenkarte einen Transponder auf, über den eine elektronische Berechtigungsprüfung in der Halterung erfolgt. Um diesen alternativen Mechanismus besser vom ersten Verriegelungsmechanismus unterscheiden zu können, wird er im Weiteren als Befestigungsmechanismus bezeichnet.

An dieser Ausführungsform ist besonders vorteilhaft, dass sie wesentlich flexibler auf gewünschte Varianten angepasst werden kann. So kann vorzugsweise der Befestigungsmechanismus und der zweite Verriegelungsmechanismus gemeinsam in einem Arbeitsschritt verriegelt bzw. wieder gelöst werden. Dies erleichtert dem Kunden die Handhabung der Halterung, da die Halterung wie auch das in der Halterung befestigte Smartphone durch die Berechtigungsprüfung in einem gemeinsamen Arbeitsschritt gegen unberechtigte Entnahme geschützt.

In einer besonders bevorzugten Ausführungsform weist die Halterung keinen Auslöser für den Befestigungsmechanismus, sondern stattdessen einen Schalter oder Schieber auf, dessen Bewegung in die eine Richtung den Befestigungsmechanismus verriegelt, während die Bewegung in die entgegengesetzte Richtung den Befestigungsmechanismus wieder löst. Ein solcher Schieber oder Schalter hat den Vorteil, dass die erforderliche Bewegung vom Mechanismus nicht nur zum Entriegeln, sondern auch zum Verriegeln genutzt werden kann. Zudem kann die für das Verriegeln erforderliche Bewegung zusätzlich dazu genutzt werden, das Smartphone in seiner Aufnahme zu verspannen.

Diese Ausführungsform ermöglicht verschiedene Alternativen der Verriegelung des Smartphones in der Halterung und/oder der Halterung am Griff.

In einer der bevorzugten Ausgestaltung dieser Ausführungsform wird durch das Bewegen des Schiebers, respektive des Schalters, sowohl das Smartphone in der Halterung wie auch die Halterung am Einkaufswagen verriegelt. Der Vorzug dieser Lösung ist, dass das Smartphone zuerst in der Halterung positioniert werden kann, aber noch nicht verriegelt ist. Es kann somit jederzeit ohne Aufwand wieder aus der Halterung entnommen werden. Erst nach Einsetzen der Halterung am Griff und Betätigen des Schalters werden Smartphone und Halterung gleichzeitig verriegelt. Diese Verknüpfung erlaubt es, den Verriegelungs- und den Befestigungsmechanismus fest miteinander zu koppeln.

Alternativ hierzu kann zuerst die Halterung am Griff eingesetzt werden, jedoch ohne sie zu befestigen. Der Kunde bekommt hierdurch die Gelegenheit, die Halterung abzulegen und damit seine Hände frei. Erst nachdem er auch das Smartphone in die Halterung eingesetzt hat, werden beide verriegelt.

Eine weitere bevorzugte Ausgestaltung ermöglicht es, das Smartphone nach Einsetzen in die Halterung dort zu verriegeln, ohne dass die Halterung bereits am Griff eingesetzt wurde. Wird nun die Halterung mit dem in ihr verriegelt gehaltenen Smartphone am Griff eingesetzt, erfolgt vorzugsweise automatisch die Verriegelung der Halterung am Griff. In einer besonders bevorzugten Ausführungsform stellt das Verriegeln des Smartphones in der Halterung den zweiten Verriegelungsmechanismus scharf. Dieser wird aber erst ausgelöst, wenn die Halterung am Einkaufswagen bzw. Einkaufswagengriff eingesetzt wurde. Dies kann auf die folgende beispielhaft beschriebene Art umgesetzt werden.

Bewegt der Kunde einen solchen Schieber oder Schalter von der Position "Offen" auf "Geschlossen", werden vor der Freigabe des Tokens vorzugsweise ein oder mehrere Zustände überprüft. Eine bevorzugte Überprüfung ist dabei, ob die Halterung am Einkaufswagen, beispielsweise an dessen Griff, ordnungsgemäß befestigt ist. Diese Position kann mittels eines Endschalters überprüft werden, der signalisiert, dass die Halterung die gewünschte Endposition am Einkaufswagen erreicht hat. Um ein ungewünschtes Lösen zu verhindern, ist die Halterung in der Endposition vorzugsweise verrastet. Die Überprüfung, ob die Halterung die gewünschte Endposition am Einkaufswagen erreicht hat, ermöglicht somit auch das automatische Auslösen des zweiten Verriegelungsmechanismus zur Verriegelung der Halterung am Einkaufswagen bzw. Einkaufswagen-Griff.

Eine andere bevorzugte Überprüfung ist, ob ein Smartphone ordnungsgemäß in der Halterung befestigt ist. Auch diese Überprüfung kann mittels eines entsprechenden Endschalters erfolgen. Ebenso ist es von Vorteil zu überprüfen, ob ein Token in die Halterung eingesteckt ist, der ausgelesen werden kann. Vorzugsweise erfolgt auch diese Überprüfung mittels eines Endschalters, der von einem vollständig eingeschobenen Token ausgelöst wird.

Nach der Verriegelung des Smartphones in der Halterung und, falls vorhanden, der Verriegelung der Halterung am Einkaufswagen kann der Token aus der Halterung entnommen werden. Wird dabei ein Token eingesetzt, der nicht dauerhaft dieser Halterung zugeordnet ist, muss vor der Entnahme des Token dessen ID ausgelesen und in der Halterung gespeichert werden. Vorzugsweise wird die ID des Tokens bei erfolgter positiver Berechtigungsprüfung direkt in einem Datenspeicher der Halterung gespeichert.

Für die Entnahme ist es vorteilhaft, wenn der Token nach dem Verriegeln des Smartphones mechanisch ein Stück aus der Halterung herausgedrückt wird. Dem Benutzer wird so signalisiert, dass die Verriegelung korrekt durchgeführt wurde, sein Smartphone gesichert ist und er den Token entnehmen kann. Hierzu ist der Befestigungsmechanismus der Art mit der Mechanik der Einschuböffnung verbunden dass eine Verriegelung des Befestigungsmechanismus einhergeht mit einer Freigabe des Token und einer Verkürzung der für den Token nutzbaren Tiefe der Einschuböffnung.

Ein Lösen der Verriegelung bzw. der Verriegelungen ist erst möglich, wenn ein passender Token wieder in die Einschuböffnung in der Halterung eingeführt worden ist und die Berechtigungsprüfung des Tokens positiv war. Ist dies der Fall, wird der Haltebügel und gegebenenfalls das die Halterung am Einkaufswagen verriegelnde Verbindungsmittel freigegeben und der Token in der Halterung gegen Entnahme gesichert.

Wie bereits erwähnt wird vor der Berechtigungsabfrage vorzugsweise überprüft, ob überhaupt ein Token in die Halterung eingeführt wurde. Hierzu kann auch der zuvor beschriebene Mechanismus zur Verkürzung der für den Token nutzbaren Tiefe der Einschuböffnung genutzt werden. Wird der Token ganz in die Einschuböffnung eingeschoben, kommt er am Mechanismus zur Anlage und drückt ihn wieder tiefer in die Einschuböffnung ein. Diese Bewegung signalisiert, dass ein Token in die Einschuböffnung eingesetzt wurde.

Vor dem Lösen der Verriegelung kann ebenfalls überprüft werden ob die Halterung am Einkaufswagen und/oder ein Smartphone in der Halterung befestigt ist. Hierzu können die zuvor genannten Endschalter eingesetzt werden. Verlaufen die durchgeführten Abfragen positiv, kann in der Ausführungsform mit Schalter oder Schieber dieser bevorzugt automatisch, aber auch manuell von "Geschlossen" auf "Offen" bewegt werden. In Folge wird die Verriegelung der Aufnahme gelöst und, falls vorhanden, die Verriegelung der Halterung am Einkaufswagen gelöst. Nun kann in einer beliebigen Reihenfolge die Halterung vom Einkaufswagen abgenommen sowie die Aufnahme für das Smartphone geöffnet und das Smartphone aus der Halterung entnommen werden.

In einer hierzu alternativen Ausführungsform muss der Token nur soweit in die Einschuböffnung eingeschoben werden, dass sein Transponder, beispielsweise ein RFID-Chip, von der Halterung ausgelesen werden kann. Die hierfür erforderliche Einschubtiefe kann durch einen Anschlag oder eine Rastposition definiert sein, gegen die der Transponder geführt wird. Wird nun der Transponder ausgelesen und als korrekt verifiziert, wird der Schalter freigegeben. Nach der Freigabe ist ein manuelles Bewegen des Schalters von "Geschlossen" auf "Offen" möglich. Vorzugsweise wird durch das Bewegen des Schalters von "Geschlossen" auf "Offen" nicht nur die Verriegelung gelöst, sondern auch der Token weiter in die Einschuböffnung eingezogen und dort gegen Entnahme gesichert. Das Einziehen des Tokens signalisiert dem Kunden darüber hinaus, dass die Verriegelung gelöst wurde. Ergänzend hierzu kann der Schalter durch das Einschieben des als korrekt verifizierten Tokens in die Position Offen gebracht werden.

Eine einfache Sicherung kann durch die Kontur des Tokens hintergreifende Elemente erfolgen. Ebenso ist es möglich, Blockadeelemente in dafür vorgesehene Öffnungen des Tokens einzuführen.

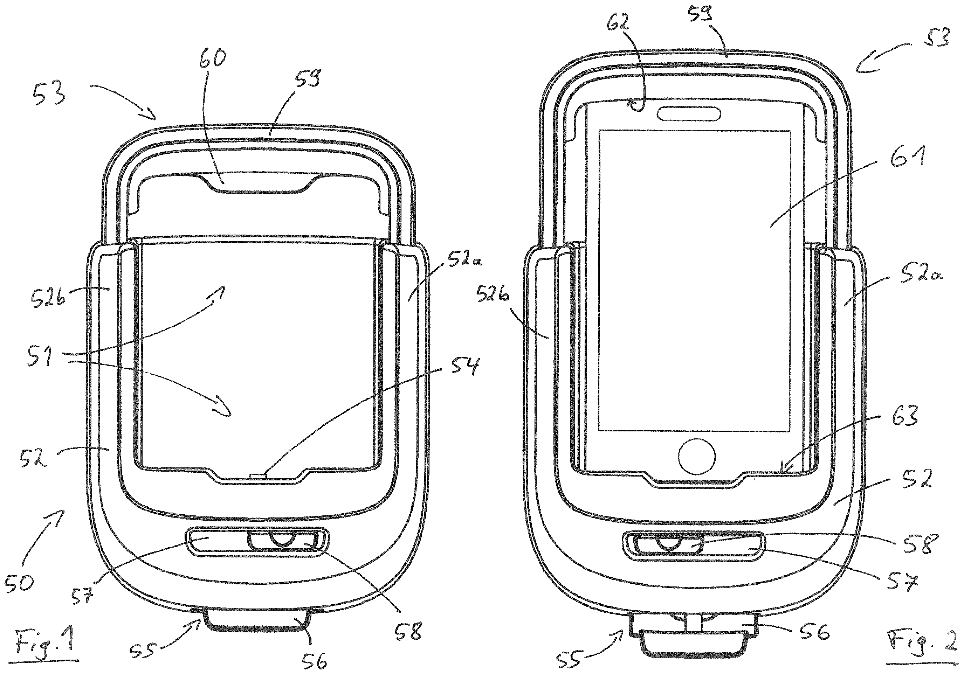

Eine bevorzugte Ausbildungsform der erfindungsgemäßen Halterung mit Befestigungsmechanismus wird anhand zweier Figuren näher erläutert. Dabei zeigt Figur 1 eine Aufsicht auf eine Halterung mit einem Haltebügel in Grundposition und Figur 2 eine Aufsicht auf die Halterung gemäß Figur 1 mit einem in die Aufnahme eingesetzten Smartphone.

Die in Figur 1 gezeigte Halterung 50 weist eine Aufnahme 51 für ein Smartphone auf. Die Aufnahme 51 umfasst einen feststehenden Teil 52 und einen beweglich an der Halterung 50 gelagerten Haltebügel 53. Der Haltebügel 53 greift in die längsseitigen Schenkel 52a, 52b des feststehenden Teils 52 ein und ist dort verschieblich gelagert. Das Eingreifen verhindert, dass der Befestigungsmechanismus frei zugänglich ist und manipuliert werden kann.

An einer vom fest stehenden Teil 52 ausgebildeten Querseite der Aufnahme 51 ist eine elektronische Schnittstelle 54 gängiger Norm angeordnet, an die ein Smartphone angeschlossen werden kann.

Die Halterung 50 weist eine Einschuböffnung 55 auf, in der ein Token 56 gehalten wird. In einer Nut 57 des feststehenden Teils 52 wird ein Schieber 58 beweglich gelagert. Der Schieber 58 in Figur 1 befindet sich in seiner zweiten Position, in welcher der Befestigungsmechanismus entriegeln ist. Somit ist der Mechanismus nicht blockiert und der U-förmige Haltebügel 53 lässt sich aus den Schenkeln 52a, 52b herausziehen, um ein Smartphone in die Aufnahme 51 einsetzen zu können.

In der von Figur 1 gezeigten Grundposition des Haltebügel 53 am feststehenden Teil 52 ist der Haltebügel 53 aufgrund seiner Federbelastung so weit in die Schenkel 52a, 52b eingeführt, dass ein auf die Schnittstelle 54 aufgesetztes Smartphone beim Verkippen in die Aufnahme 51 mit seiner Rückseite auf einer Oberkante 59 des Haltebügel 53 zur Anlage kommt. Wird nun der Haltebügel 53 gegen die Federbelastung aus den Schenkeln 52a, 52b herausgezogen, vergrößert sich die Aufnahme 51. Je nach Größe des einzusetzenden Smartphones ist die Aufnahme 51 irgendwann lang genug, so dass das Smartphone nicht mehr an der Oberkante 59 zur Anlage kommt, sondern vollständig in die Aufnahme 51 eingesetzt werden kann. In dem die Unterkante 60 des Haltebügel 53 im Vergleich zu Oberkante 59 weiter in die Aufnahme 51 vorsteht bzw. eine Zunge 60 ausgeformt, kommt das in die Aufnahme eingesetzte Smartphone hier zur Anlage. Wird nun der Haltebügel 53 losgelassen, wird er durch die Federbelastung gegen die obere Außenkante des Smartphones gedrückt.

Die Figur 2 zeigt ein solchermaßen in die Aufnahme 51 eingesetztes Smartphone 61. Das Smartphone 61 liegt auf der von ihm verdeckten Zunge 60 auf und liegt mit seiner oberen Außenkante 62 an der Innenseite des Bügels 53 an. Vorzugsweise erfolgt dieses Anliegen in Form einer Hinterschneidungen, so dass das Smartphone zwischen Zunge 60 und Oberkante 59 des Bügels 53 gehalten wird. Auch die Unterkante 63 des Smartphones hinterschneidet den feststehenden Teil 52 an der unteren Querseite der Aufnahme 51. Ein unbefugtes Herausnehmen des Smartphones 61 wäre dann nur unter Zerstörung der Halterung 50 sowie einer höchst wahrscheinlichen Beschädigung des Smartphones 61 durchführbar.

In dieser Position des Smartphones 61 kann der Schieber 58 in die von Figur 2 gezeigte erste Position verschoben werden, in welcher der Haltebügel 53 verriegelt ist und nicht mehr bewegt werden kann. Ist die Verriegelung erfolgt, wird dies durch ein leichtes Herausschieben des Tokens 56 aus der Einschuböffnung 55 signalisiert. Der die Halterung benutzende Kunde weiß dann, dass sein Smartphone verriegelt ist und er den Token entnehmen kann.

## Patentansprüche

1. Verfahren zur lösbaren Befestigung einer Smartphone - Halterung an einem Einkaufswagen, wobei in einem ersten Schritt ein Smartphone (61) auf eine Aufnahme (51) der Halterung (50) aufgesetzt wird, wobei in einem zweiten Schritt das Smartphone (61) in der Aufnahme (51) verriegelt wird, wobei das Verriegeln des Smartphones (61) in der Aufnahme (51) einen Verriegelungsmechanismus aktiviert, der die in eine dafür vorgesehene zweite Aufnahme am Einkaufswagen eingesetzte Halterung automatisch in der zweiten Aufnahme verriegelt,
**dadurch gekennzeichnet,**
**dass** mit Verriegeln des Smartphones (61) in der Halterung (50) ein in eine Einschuböffnung (55) der Halterung (50) eingesetzte Token (56) freigegeben wird, dass zum Lösen der Verriegelung der Token (56) wieder in die Einschuböffnung (55) eingesetzt wird und dass der Token (56) in eine erste Position in der Einschuböffnung (55) eingesetzt wird, in der eine Berechtigungsüberprüfung erfolgt, wobei bei positiver Berechtigungsüberprüfung ein manuelles Lösen der Verriegelung möglich ist und wobei mit Lösen der Verriegelung der Token (56) tiefer in die Halterung gezogen wird.

2. Verfahren nach Anspruch 1,
**dadurch gekennzeichnet,**
**dass** das Einsetzen der Halterung (50) in die zweite Aufnahme am Einkaufswagen mittels eines Endschalters überprüft wird, wobei das vom Endschalter ausgelöste Signal den die Halterung (50) in der zweiten Aufnahme am Einkaufswagen verriegelnden Verriegelungsmechanismus aktiviert

## Claims

1. Method of detachably fastening a smartphone holder to a shopping trolley, wherein in a first step a smartphone (61) is placed on a mounting (51) of the holder (50), wherein in a second step the smartphone (61) is locked in the mounting (51), wherein locking the smartphone (61) in the mounting (51) activates a locking mechanisms which automatically locks the holder inserted into a second mounting provided therefore on the shopping trolley into the second mounting,
**characterised in that**
on locking the smartphone (61) in the holder (50), a token (56) inserted in an insertion opening (55) of the holder (50) is released, **in that** to undo the locking, the token (56) is inserted into the insertion opening (55) again and **in that** the token (56) is inserted into a first position in the insertion opening (55) in which an authorisation check takes place, wherein in the case of a positive authorisation check manual undoing of the locking is possible and wherein with the undoing of the locking the token (56) is pulled deeper into the holder.

2. Method according to claim 1
**characterised in that**
the insertion of the holder (50) into the mounting on the shopping trolley is checked by way of a limit switch, wherein the signal triggered by the limit switch activates the locking mechanism which locks the holder (50) in the second mounting on the shopping trolley.

## Revendications

1. Procédé, destiné à fixer de manière amovible un support de smartphone sur un chariot de supermarché, lors duquel, dans la première étape, on place un smartphone (61) sur un réceptacle (51) du support (50), lors duquel, dans une deuxième étape, on verrouille le smartphone (61) dans le réceptacle (51), le verrouillage du smartphone (61) dans le réceptacle (51) activant un mécanisme de verrouillage qui verrouille automatiquement dans le deuxième réceptacle le support inséré dans un deuxième réceptacle prévu à cet effet sur le chariot de supermarché,
**caractérisé en ce que**
le verrouillage du smartphone (61) dans le support (50) libère un jeton (56) inséré dans un orifice d'insertion (55) du support (50), **en ce que** pour désolidariser le verrouillage, on réinsère le jeton (56) dans l'orifice d'insertion (55) et **en ce qu'**on insère le jeton (56) dans l'orifice d'insertion (55) dans une première position dans laquelle a lieu un contrôle d'autorisation, si le contrôle d'autorisation est positif, une désolidarisation manuelle du verrouillage étant possible, du fait de la désolidarisation du verrouillage, le jeton (56) étant tiré plus profondément dans le support.

2. Procédé selon la revendication 1,
**caractérisé en ce que**
l'insertion du support (50) dans le deuxième réceptacle sur le chariot de supermarché est contrôlée au moyen d'un interrupteur de fin de course, le signal déclenché par l'interrupteur de fin de course activant le mécanisme de verrouillage verrouillant le support (50) dans le deuxième réceptacle sur le chariot de supermarché.
